# EUROPEAN PATENT SPECIFICATION

(11) **EP 3 192 700 B1**
(45) Date of publication and mention of the grant of the patent: **24.10.2018**
(21) Application number: 15840456.6
(22) Date of filing: 03.09.2015
(51) Int. Cl.: B60R 1/12, B60R 1/04, H04N 7/18

(54) **DISPLAY FUNCTION-EQUIPPED MIRROR DEVICE AND DISPLAY SWITCHING METHOD**
MIT EINER ANZEIGEFUNKTION AUSGESTATTETE SPIEGELVORRICHTUNG UND VERFAHREN ZUR UMSCHALTUNG DER ANZEIGE
DISPOSITIF DE MIROIR ÉQUIPÉ D'UNE FONCTION D'AFFICHAGE ET PROCÉDÉ DE COMMUTATION D'AFFICHAGE

(30) Priority: 10.09.2014 JP 2014184110
(43) Date of publication of application: 19.07.2017
(73) Proprietor: JVC Kenwood Corporation, Yokohama-shi, Kanagawa 221-0022 (JP)
(72) Inventor: KAWAGUCHI, Tomoyo, Yokohama-shi Kanagawa 221-0022 (JP)
(74) Representative: Klang, Alexander H.
(86) International application number: PCT/JP2015/075121
(87) International publication number: WO 2016/039256

(56) References cited:
- EP-A1- 2 487 069
- JP-A- 2002 120 649
- JP-A- 2005 189 725
- JP-A- 2010 130 647
- JP-A- 2012 046 099
- JP-A- 2014 015 198

## Description

### Field

The present invention relates to a mirror device with a display function, the mirror device having an image display function as well as a reflection function, and a display switching method.

### Background

A rearview mirror attached inside an interior of an automobile and provided with a display function has been proposed. In the display function, a picture of a camera that captures the rear of the automobile is displayed.

JP 2001-191858 A discloses a rearview mirror including a monitor device on a back surface of a half mirror, and displaying a plurality of camera pictures at the same time. Further, JP 2009-100180 A discloses a rearview mirror that changes a display size of a captured image.

EP 2 487 069 A discloses an internal retrospection unit including a foot and a projection surface, which is arranged on a head portion. A detection unit is provided for detecting the gestures by capturing different positions and orientations of a body portion of a vehicle occupant in a vehicle interior section for performing an individual adjustment of the internal retrospection unit by the gesture.

### Summary

### Technical Problem

In a case of a rearview mirror with a display function using a half mirror, there are a reflection function with the half mirror and the display function to display a display picture such as a liquid crystal display panel through the half mirror, and the functions need to be switched according to a purpose of a user. Further, unlike a normal rearview mirror, a range to display an image in the rearview mirror with a display function can be changed by setting a cutting range of the image captured with a camera.

Switching of the functions and an operation of the display range of the rearview mirror with a display function are often performed during driving of the automobile, and prevention of impairment of safety is required. Therefore, these operations are desirably not independent operation systems, and are desirably a unified operation system. Further, it is desirable that these operations are intuitively operable for the user during driving, and a mistake of an operation does not occur.

A mirror device with a display function according to an embodiment includes, a rearview mirror with a display function, the rearview mirror including a display panel that displays a picture of an imaging device that captures rear of a vehicle, and a half mirror provided in a display surface of the display panel, a motion sensor configured to perform motion detection, and a switching control unit configured to perform processing of switching a function to the display function that executes display on the display panel, in a motion detection result in any direction of directions detected by the motion sensor, when the rearview mirror with a display function functions as a rearview mirror using a mirror surface of the half mirror and the display on the display panel is stopped, and process the motion detection detected by the motion sensor as a moving instruction of a display range to each of the directions, when the rearview mirror with a display function is executing the display function in which the display on the display panel is being executed.

A display switching method according to another embodiment includes switching a function to a display function that executes display on a display panel, in a motion detection result in any direction of directions detected by a motion sensor that performs motion detection, when a rearview mirror with a display function including a display panel that displays a picture of an imaging device that captures rear of a vehicle, and a half mirror provided in a display surface of the display panel functions as a rearview mirror using a mirror surface of the half mirror and the display on the display panel is stopped, and performing a moving instruction of a display range to each of the directions, by the motion detection detected by the motion sensor, when the rearview mirror with a display function is executing the display function in which the display on the display panel is being performed.

According to the present embodiment, the switching of functions and the operation of a display range can be intuitively performed without impairing safety.

### Brief Description of the Drawings

FIG. 1 is an external view of a rearview mirror with a display function according to the present invention.
FIG. 2 is a sectional view of the rearview mirror with a display function according to the present invention.
FIG. 3 is a conceptual diagram of a motion sensor used in the rearview mirror with a display function according to the present invention.
FIG. 4 is a functional block diagram of a mirror device with a display function according to a first embodiment of the present invention.
FIG. 5 is a flowchart illustrating a display switching method of the mirror device with a display function according to the first embodiment of the present invention.
FIG. 6A is a conceptual diagram illustrating a shift example of a display range according to the first embodiment of the present invention.
FIG. 6B is a conceptual diagram illustrating a shift example of the display range according to the first embodiment of the present invention.
FIG. 6C is a conceptual diagram illustrating a shift example of the display range according to the first embodiment of the present invention.
FIG. 6D is a conceptual diagram illustrating a shift example of the display range according to the first embodiment of the present invention.
FIG. 6E is a conceptual diagram illustrating a shift example of the display range according to the first embodiment of the present invention.
FIG. 7 is a functional block diagram of a mirror device with a display function according to a second embodiment of the present invention.
FIG. 8 is a conceptual diagram illustrating an example of attaching positions and capture ranges of cameras according to the second embodiment of the present invention.
FIG. 9 is an external view of a rearview mirror with a display function according to the second embodiment of the present invention.
FIG. 10 is a sectional view of the rearview mirror with a display function according to the second embodiment of the present invention.
FIG. 11 is a flowchart illustrating a display switching method of the mirror device with a display function according to the second embodiment of the present invention.
FIG. 12A is a conceptual diagram illustrating a shift example of a display range according to the second embodiment of the present invention.
FIG. 12B is a conceptual diagram illustrating a shift example of the display range according to the second embodiment of the present invention.
FIG. 12C is a conceptual diagram illustrating a shift example of the display range according to the second embodiment of the present invention.
FIG. 12D is a conceptual diagram illustrating a shift example of the display range according to the second embodiment of the present invention.
FIG. 12E is a conceptual diagram illustrating a shift example of the display range according to the second embodiment of the present invention.

### Detailed Description

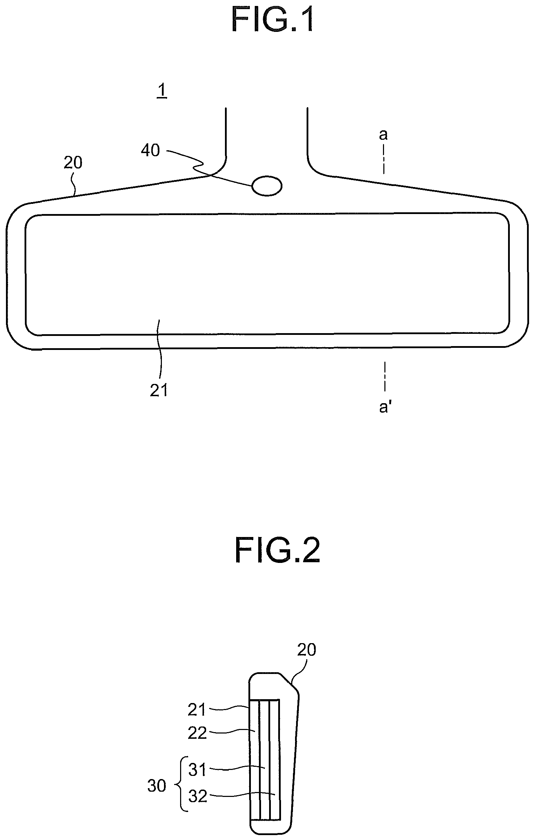

Hereinafter, a first embodiment of the present invention will be described. FIG. 1 is an external view of a rearview mirror with a display function 1 according to a first embodiment of the present invention as viewed from a driver side as a user. The rearview mirror with a display function 1 is attached in a traveling direction of a vehicle as viewed from the user and is typically attached to an upper portion of a windshield or the like, similarly to a normal rearview mirror.

The rearview mirror with a display function 1 includes a mirror surface 21 that reflects the rear to the user, a cover 20 that covers the mirror surface 21 and functions as a housing, and a motion sensor 40 as a sensor that receives an operation of the user. In the present embodiment, the motion sensor 40 is arranged in a central upper portion of the rearview mirror with a display function 1. However, the arrangement location is not limited as long as the motion sensor 40 can properly recognize a motion for the purpose of the operation of the user without a mistake, and the motion sensor 40 may be arranged at a position separated from the rearview mirror with a display function 1.

FIG. 2 is a diagram schematically illustrating a sectional view of a-a' of the rearview mirror with a display function 1 illustrated in FIG. 1.

As illustrated in FIG. 2, the mirror surface 21 is a surface configured by a half mirror 22. Further, a liquid crystal panel 31 and a backlight 32 having nearly the same shape as the half mirror 22 are arranged inside the cover 20. The liquid crystal panel 31 and the backlight 32 configure a display panel 30. The display panel 30 may be a spontaneous light emitting display panel such as an organic electro luminescence (EL) panel, in place of the combination of the liquid crystal panel 31 and the backlight 32 as long as it has a configuration in which a picture to be displayed is formed by emission of light. In FIG. 2, illustration of a power source circuit and the like for driving the display panel 30 are omitted.

When display on the display panel 30 is not performed in the rearview mirror with a display function 1 illustrated in FIGS. 1 and 2, the backlight 32 is not lighted. At this time, the half mirror 22 reflects the most part of light incident on the mirror surface 21. Therefore, the rearview mirror with a display function 1 is operated in a mirror mode in which the user confirms the rear with the reflection on the mirror surface 21. Further, when display on the display panel 30 is performed in the rearview mirror with a display function 1, the backlight 32 is lighted. At this time, light emitted by the backlight 32 is transmitted through the half mirror 22 via the liquid crystal panel 31. Therefore, the rearview mirror with a display function 1 is operated in a display mode in which a picture to be displayed on the display panel 30 is displayed.

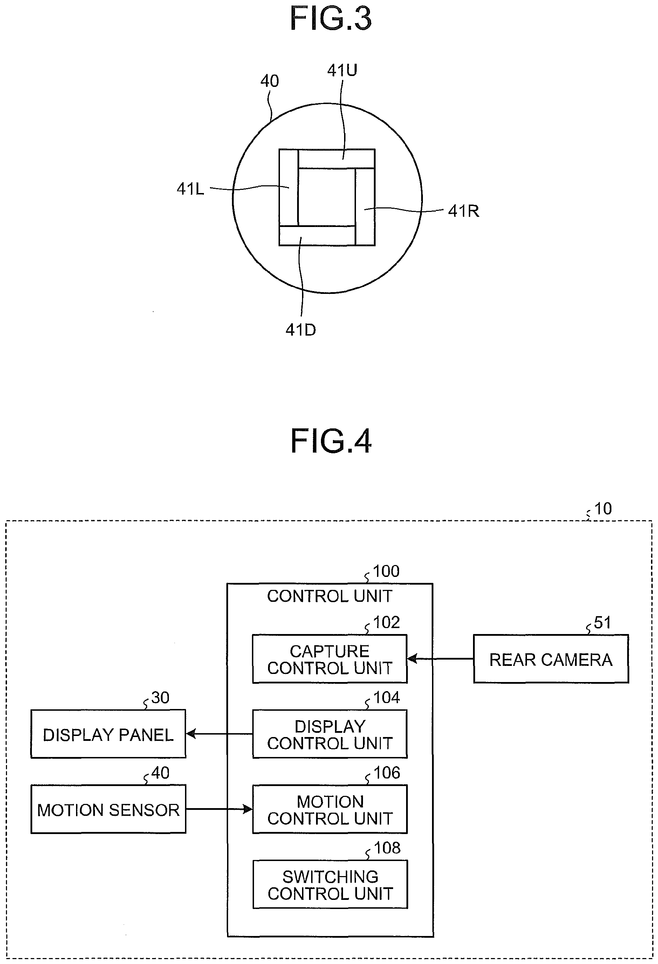

FIG. 3 is a diagram conceptually illustrating the motion sensor 40 used in the rearview mirror with a display function 1. The motion sensor 40 is a sensor in which a plurality of photodiodes is combined. In a case where four photodiodes are combined, the motion sensor 40 can detect motions in four directions. The motion sensor 40 includes an upward direction detection photodiode 41U, a downward direction detection photodiode 41D, a left direction detection photodiode 41L, and a right direction detection photodiode 41R therein. The upward, downward, right, and left directions of the photodiodes are arranged in conformity to upward, downward, right, and left directions of the rearview mirror with a display function 1 as viewed from the user, illustrated in FIG. 1. A detectable range of an object by such a motion sensor 40 is 0.1 to 0.2 m in front of the motion sensor 40. Note that, in the present embodiment, four directions of the upward, downward, right, and left will be exemplarily described for convenience of description. However, the upward, downward, right, and left directions are an example, and the present embodiment is not limited to the four directions and the number of directions is not limited to four.

FIG. 4 is a diagram illustrating a functional block diagram of a mirror device with a display function 10 according to the first embodiment. The mirror device with a display function 10 is configured of the display panel 30 and the motion sensor 40 that configure the rearview mirror with a display function 1, and a control unit 100 that processes various data. The control unit 100 is configured of a central processing unit (CPU) that processes various data, a digital signal processor (DSP), a memory, and the like. The control unit 100 may be built in the rearview mirror with a display function 1, and control functions of a navigation device, an on-vehicle computer, and the like may be used.

The control unit 100 includes a capture control unit 102, a display control unit 104, a motion control unit 106, and a switching control unit 108 on the basis of its functions. Each of the functions may be realized by control functions mounted on a single device, or may be realized by control functions mounted on a plurality of distributed devices.

The capture control unit 102 acquires picture data captured by a rear camera 51, which is mounted in a direction to be able to capture the rear of the vehicle on which the mirror device with a display function 10 is mounted.

The display control unit 104 performs processing of displaying, on the display panel 30, the picture data acquired by the capture control unit 102. To be specific, the display control unit 104 adjusts cutting of the picture data in accordance with the shape of the display panel 30, and the brightness and tone of the picture.

The motion control unit 106 acquires an output signal from the motion sensor 40, and detects a direction of a motion and the like. The motion control unit 106 analyzes distribution of peak values of detected waveforms of when each of the four photodiodes included in the motion sensor 40 detects an object, and detects which direction of the upward, downward, right, and left directions the object has passed in front of the motion sensor 40. Further, the motion control unit 106 can detect the direction as reciprocation of the object in the upward and downward direction when continuously detecting passage of the object in the upward direction and the downward direction within a predetermined time. Similarly, the motion control unit 106 can detect the direction as reciprocation of the object in the right and left direction when continuously detecting passage of the object in the left direction and the right direction within a predetermined time.

The motion control unit 106 acquires output values from each of the photodiodes of the motion sensor 40 on a steady basis during a term in which the motion should be detected. The motion control unit 106 acquires an output value Uout of the upward direction detection photodiode 41U, an output value Dout of the downward direction detection photodiode 41D, an output value Lout of the left direction detection photodiode 41L, and an output value Rout of the right direction detection photodiode 41R.

The motion control unit 106 determines a gesture direction from peak waveforms of (Uout - Dout)/(Uout + Dout), and (Rout - Lout)/(Rout + Lout), for example. Further, the motion control unit 106 determines that the motion is a reciprocating motion when detecting a motion direction in an opposite direction to the determined motion direction within a predetermined time, which is set to one to two seconds, for example.

The switching control unit 108 controls the display control unit 104 on the basis of a detection result of the motion control unit 106. To be specific, when the rearview mirror with a display function 1 is being operated in the mirror mode, the switching control unit 108 performs control to switch the mirror mode to the display mode in a motion detection result in any of the four directions detected by the motion control unit 106. Switching from the mirror mode to the display mode is a control by the display control unit 104 for the display panel 30, and is to switch from a state in which no picture of the rear camera 51 is displayed to a state in which a picture is displayed. Further, when the rearview mirror with a display function 1 is being operated in the display mode, the motion detection of the four directions detected by the motion control unit 106 is processed as a moving instruction of the display range to the detected directions.

Further, the switching control unit 108 performs processing of switching from the display mode to the mirror mode by reciprocating motion detection of the four directions detected by the motion control unit 106 when the rearview mirror with a display function 1 is being operated in the display mode.

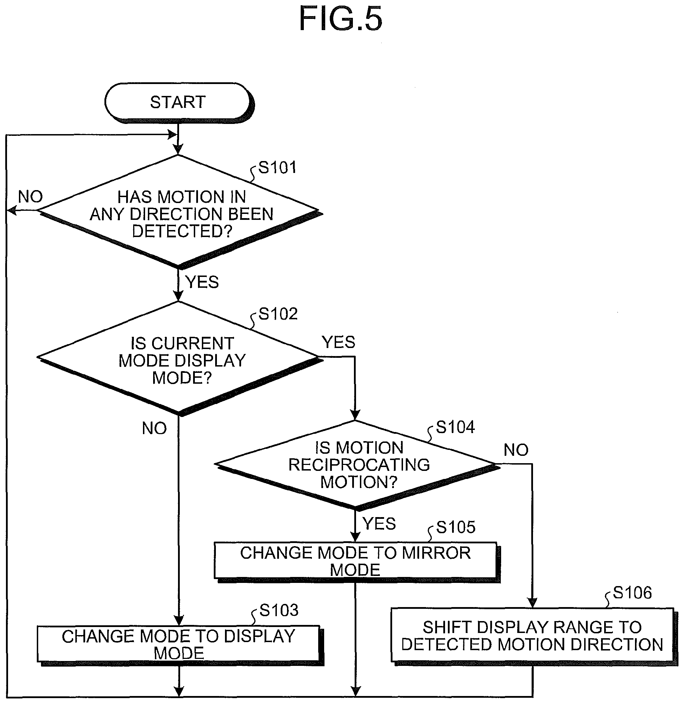

Next, a display switching method of the mirror device with a display function 10 according to the first embodiment will be described using FIG. 5.

The switching control unit 108 determines whether the motion control unit 106 has detected a motion in any direction (step S101). In step S101, when the motion has not been detected (No in step S101), the processing returns to step S101. In step S101, when the motion in any direction has been detected (Yes in step S101), the switching control unit 108 determines whether the rearview mirror with a display function 1 is being operated in the display mode or in the mirror mode (step S102). The determination of step S102 is made according to whether the display control unit 104 causes the display panel 30 to be displaying the picture of the rear camera 51.

In step S102, when the rearview mirror with a display function 1 is determined to be being operated in the mirror mode, instead of the display mode (No in step S102), the switching control unit 108 controls the display control unit 104 to cause the display panel 30 to display the picture of the rear camera 51, and changes the mirror mode to the display mode (step S103).

In step S102, when the rearview mirror with a display function 1 is determined to be being operated in the display mode (Yes in step S102), the switching control unit 108 determines whether the motion detected by the motion control unit 106 is a reciprocating motion (step S104). The reciprocating motion is determined in a case where a motion in an opposite direction is continuously detected within a time set in advance such as one to two seconds. The case is, for example, when a motion in the downward direction is detected within one second after a motion in the upward direction is detected. The same applies to the right and left direction.

In step S104, when the motion is determined to be a reciprocating motion (Yes in step S104), the switching control unit 108 changes the operation of the rearview mirror with a display function 1 to the mirror mode (step S105). In step S104, when the motion is determined not to be a reciprocating motion (No in step S104), the switching control unit 108 controls the display control unit 104 to shift the display range in the direction of the detected motion (step S106).

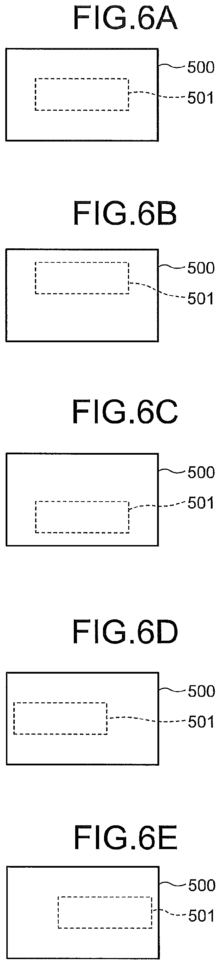

FIGS. 6A to 6E are diagrams conceptually illustrating shift examples of the display range in the processing of step S106. The rear camera 51 is a camera that captures the rear of the vehicle in a wide range. In FIGS. 6A to 6E, a display range 501 is a range in which a capture range 500 of the rear camera 51, which is captured by the rear camera 51, is cut by the display control unit 104, and the cut range is displayed as display data of the display panel 30.

FIG. 6A illustrates the display range 501 of the rear camera 51 in a normal state with respect to the capture range 500 of the rear camera 51. FIG. 6B illustrates an example of when the processing of step S106 is executed for the motion detection in the upward direction detected in step S101, and an upper portion than the portion of FIG. 6A is displayed regarding the display range 501. FIG. 6C illustrates an example of when the processing of step S106 is executed for the motion detection in the downward direction detected in step S101, and a lower portion than the portion of FIG. 6A is displayed regarding the display range 501. FIG. 6D illustrates an example of when the processing of step S106 is executed for the motion detection in the left direction detected in step S101, and a more left portion than the portion of FIG. 6A is displayed regarding the display range 501. FIG. 6E illustrates an example of when the processing of step S106 is executed for the motion detection in the right direction detected in step S101, and a more right portion than the portion of FIG. 6A is displayed regarding the display range 501.

The processing of step S106 may be performed such that the display range is shifted by a maximum shift amount set in advance in the motion detection of one time, or the display range may be shifted by a 1/n shift amount of the maximum shift amount set in advance in the motion detection of one time, and then the display range may be shifted up to the maximum shift amount in the motion detection of up to n times in the same direction.

With such processing, switching of the functions and an operation of the display range can be intuitively performed without impairing safety through the motion detection of only the four directions, using the motion sensor 40.

Next, a second embodiment of the present invention will be described. In the second embodiment, description of details of configurations and processing common to the first embodiment is omitted.

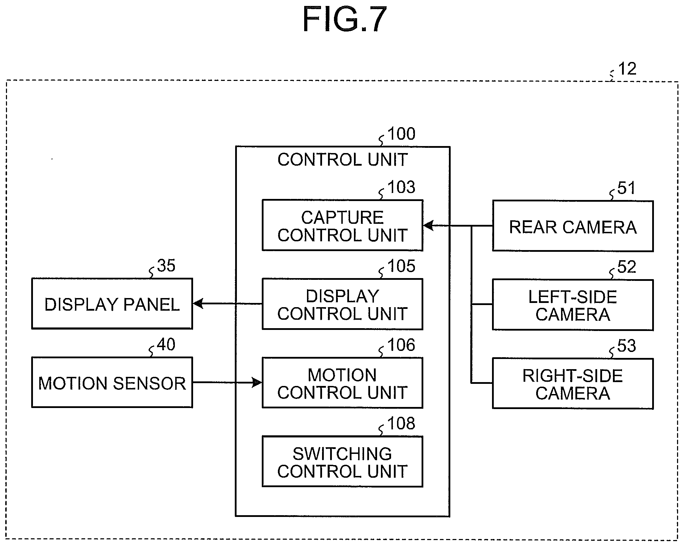

A configuration of a mirror device with a display function 12 according to the second embodiment acquires picture data captured by a left-side camera 52 and a right-side camera 53, as illustrated in FIG. 7, in addition to a rear camera 51. That is, a capture control unit 103 acquires pictures captured by each of the left-side camera 52 and the right-side camera 53, in addition to a picture captured by the rear camera 51.

A display control unit 105 performs processing of displaying the picture data of the left-side camera 52 and the right-side camera 53 on a display panel 35, in addition to the picture data of the rear camera 51 acquired by the capture control unit 103. To be specific, the display control unit 105 performs cutting of each of the picture data in accordance with the shape of the display panel 35, adjustment of brightness and tone of the pictures, synthesis of the picture data, and the like.

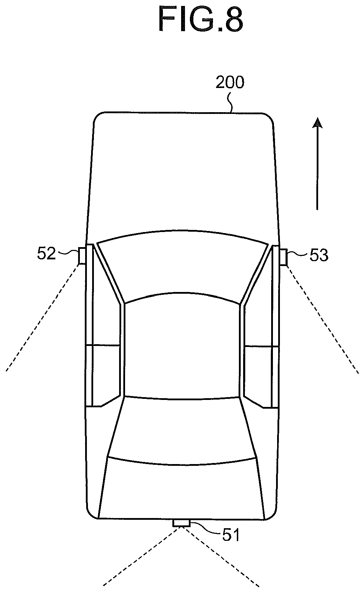

FIG. 8 is a conceptual diagram illustrating an example of attaching positions and capture ranges of the cameras with which the mirror device with a display function 12 according to the second embodiment acquires the picture data, and illustrates a state as viewed from above a vehicle 200. In FIG. 8, the arrow represents the front of the vehicle 200, and the broken lines represent respective capture ranges of the rear camera 51, the left-side camera 52, and the right-side camera 53. The rear camera 51 is arranged on the rear of the vehicle 200, and captures the rear of the vehicle 200 in a wide range, which is similar to the first embodiment. The right-side camera 53 and the left-side camera 52 are arranged on right and left sides of the vehicle 200, respectively, and capture the right rear and left rear of vehicle 200. Installation positions of the right-side camera 53 and the left-side camera 52 are positions of wing mirrors in the example of FIG. 8. However, the right-side camera 53 and the left-side camera 52 may be installed at other positions such as right and left sides of fenders.

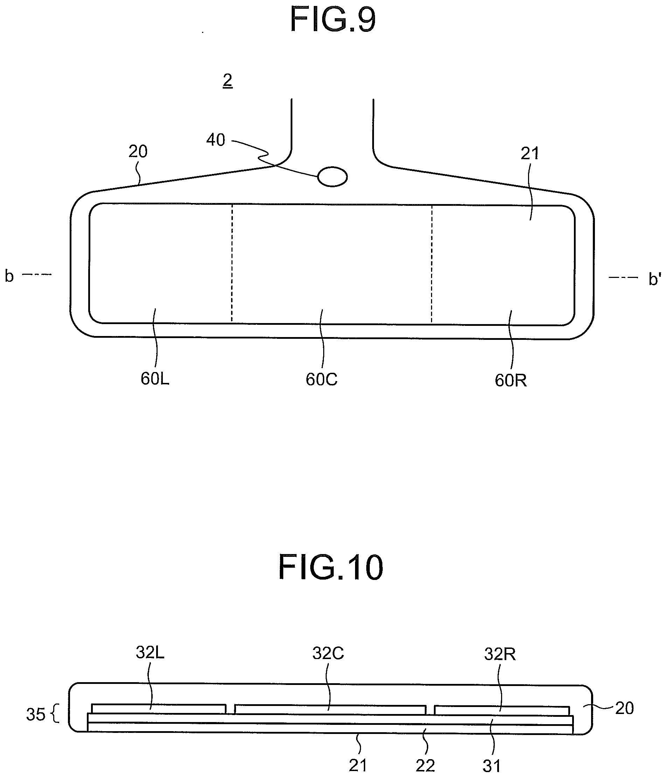

FIG. 9 is an external view of a rearview mirror with a display function 2 used in the mirror device with a display function 12 according to the second embodiment as viewed from a driver side as a user. The rearview mirror with a display function 2 is different from the rearview mirror with a display function 1 in that the pictures of the left-side camera 52 and the right-side camera 53 are displayed, in addition to the picture of the rear camera 51, in a display mode.

The broken lines illustrated in the mirror surface 21 of the rearview mirror with a display function 2 illustrated in FIG. 9 represent sections in which the pictures of each of the cameras are displayed. A left display section 60L in which the picture of the left-side camera 52 is displayed, a central display section 60C in which the picture of the rear camera 51 is displayed, and a right display section 60R in which the picture of the right-side camera 53 is displayed are illustrated.

FIG. 10 is a diagram schematically illustrating a sectional view of b-b' of the rearview mirror with a display function 2 illustrated in FIG. 9.

As illustrated in FIG. 10, independently light-controllable left backlight 32L, central backlight 32C, and right backlight 32R are provided in the rear of a liquid crystal panel 31, corresponding to the positions of the left display section 60L, the central display section 60C, and the right display section 60R. These backlights may be independent of each other, or one backlight may be light-controllable in each section. The display panel 35 is configured of the liquid crystal panel 31, the left backlight 32L, the central backlight 32C, and the right backlight 32R. Further, a spontaneous light emitting display panel such as an organic electro luminescence (EL) panel that controls ON/OFF of display in each section may be employed in place of the combination of the liquid crystal panel 31, the left backlight 32L, the central backlight 32C, and the right backlight 32R.

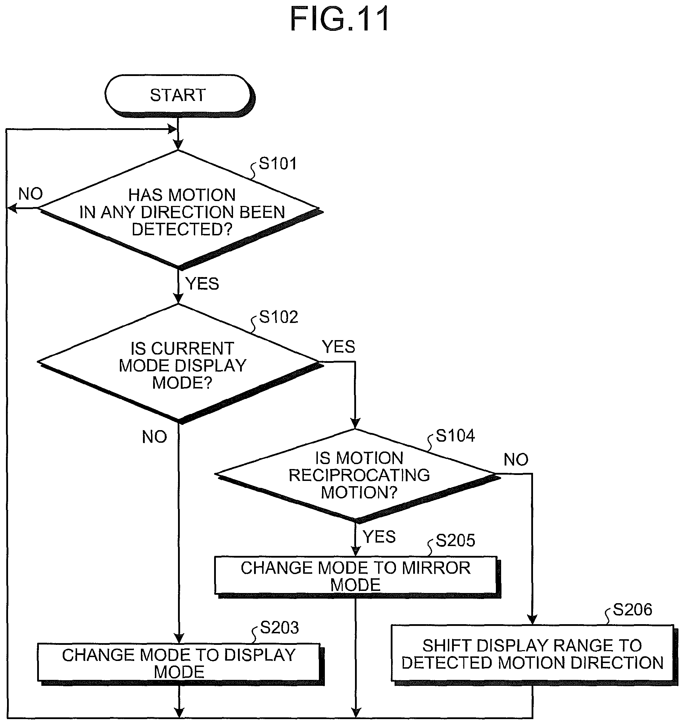

Next, a display switching method of the mirror device with a display function 12 according to the second embodiment will be described using FIG. 11.

In the second embodiment, a display mode is a state in which the pictures of the rear camera 51, the left-side camera 52, and the right-side camera 53 are displayed in the left display section 60L, the central display section 60C, and the right display section 60R. Further, a mirror mode includes two patterns. In a first mirror mode, display is not performed in all of the sections. In the second mirror mode, display is performed in the left display section 60L and the right display section 60R, and display is not performed in the central display section 60C. When the mirror device with a display function 12 is being operated in the second mirror mode, the display control unit 105 does not perform display of a portion corresponding to the central display section 60C of the liquid crystal panel 31 and puts off the central backlight 32C.

In step S102, when the rearview mirror with a display function 2 is determined to be being operated in the mirror mode instead of the display mode (No in step S102), a switching control unit 108 controls the display control unit 105 to display the pictures in all of the sections of the display panel 35, and changes the mirror mode to the display mode (step S203).

In step S104, when a motion is determined to be a reciprocating motion (Yes in step S104), the switching control unit 108 changes the operation of the rearview mirror with a display function 2 to the mirror mode (step S205). The mirror mode changed in step S205 may be the first mirror mode or may be the second mirror mode.

In step S104, when the motion is determined not to be a reciprocating motion (No in step S104), the switching control unit 108 controls the display control unit 105 to shift a display range in a direction of the detected motion (step S206).

At the time of execution of step S206, the display control unit 105 can take two types of shift processing below. First shift processing is processing of shifting only the picture of the rear camera 51 displayed in the central display section 60C, and not shifting the pictures of the left-side camera 52 and the right-side camera 53 displayed in the left display section 60L and the right display section 60R. In the case of the first shift processing, the pictures displayed in the left display section 60L and the right display section 60R are not necessary to be shifted because the pictures correspond to rear pictures viewed on the wing mirrors, and the picture displayed in the central display section 60C is shifted as needed because the picture corresponds to a picture viewed on the rearview mirror. With such processing, the user can intuitively perform switching of the mirror mode and the display mode, and an operation of a display range of an object to be displayed in the display mode without impairing safety.

Further, second shift processing is processing of similarly shifting the pictures of the left-side camera 52 and the right-side camera 53 displayed in the left display section 60L and the right display section 60R in addition to the picture of the rear camera 51 displayed in the central display section 60C. In the case of the second shirt processing, even if the direction of the rearview mirror with a display function 2 cannot be structurally changed, similar display shift can be performed. With such processing, the user can intuitively perform switching of the mirror mode and the display mode, and an operation of a display range of an object to be displayed in the display mode without impairing safety.

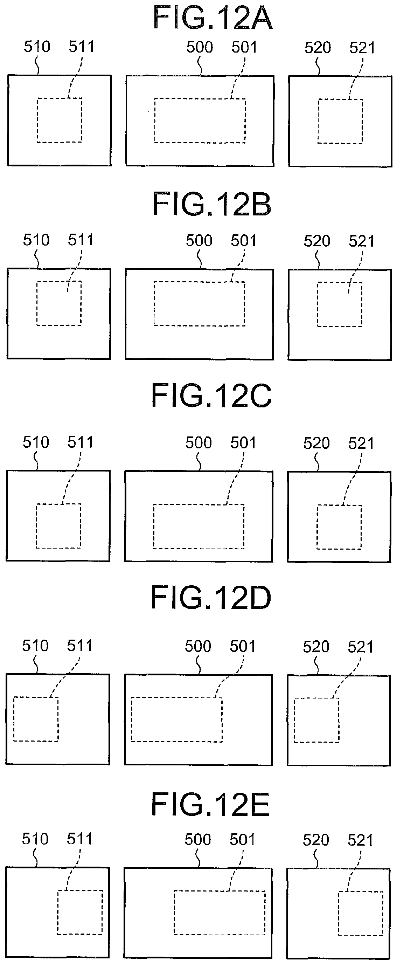

FIGS. 12A to 12E are diagrams conceptually illustrating shift examples of the display range in the processing of step S206. FIGS. 12A to 12E illustrate examples of the second shift processing. In FIGS. 12A to 12E, a display range 501 in a capture range 500 of the rear camera 51 is a range in which a capture range 500 of the rear camera 51, which is captured by the rear camera 51, is cut by the display control unit 105, and the cut range is displayed as display data of the display panel 35. Similarly, in FIGS. 12A to 12E, a display range 511 in a capture range 510 of the left-side camera 52 is a range in which a capture range 510 of the left-side camera 52, which is captured by the left-side camera 52, is cut by the display control unit 105, and the cut range is displayed as display data of the display panel 35. Further, in FIGS. 12A to 12E, a display range 521 in a capture range 520 of the right-side camera 53 is a range in which a capture range 520 of the right-side camera 53, which is captured by the right-side camera 53, is cut by the display control unit 105, and the cut range is displayed as display data of the display panel 35.

In a case where the display control unit 105 performs the shift processing in the respective directions, the display control unit 105 synthesizes the display range 501 in the capture range 500 of the rear camera 51, the display range 511 in the capture range 510 of the left-side camera 52, and the display range 521 in the capture range 520 of the right-side camera 53, and displays the synthesized capture range on the liquid crystal panel 31.

The embodiments of the present invention can be changed in various manner without departing from the gist of the present invention. For example, in the first embodiment, the display range 501 in the capture range 500 of the rear camera 51, which is displayed in the shift processing of step S106, may be changed compared with the display range before shift. For example, in a case of making the display range 501 in the capture range 500 of the rear camera 51 after shirt narrower than that before shift, an effect similar to zoom of the display range can be obtained. Therefore, a range of a moving instruction of the display range can be visually observed by motion detection. Further, in a case of making the display range 501 in the capture range 500 of the rear camera 51 after shift wider than that before shirt, the display range can be made wide angle. These pieces of processing may be set in advance. Further, either piece of the processing may be determined according to time length of a peak waveform that indicates the motion detected in step S101. To be specific, if the peak waveform that indicates the motion detected in step S101 is less than 0.4 seconds as an example of a threshold, the display range 501 in the capture range 500 of the rear camera 51 after shift is made narrower than that before shift. If the peak waveform is the threshold or more and is upper time length recognized as a motion, the display range 501 in the capture range 500 of the rear camera 51 after shift is made wider than that before shift.

When applying similar motion detection to the second embodiment, if the time length of the peak waveform that indicates the motion detected in step S101 is less than the threshold, either the display range 511 in the capture range 510 of the left-side camera 52 or the display range 521 in the capture range 520 of the right-side camera 53, corresponding to a motion detection direction, is cut narrow. If the time length is the threshold or more, the display range is cut wide.

### Industrial Applicability

As described above, the mirror device with a display function and the display switching method according to the present invention are useful when a picture of a camera that captures the rear of a vehicle and the like is displayed on a rearview mirror attached inside a vehicle interior, and is especially suitable when switching of functions and an operation of a display range are performed.

### Reference Signs List

1 and 2 REARVIEW MIRROR WITH A DISPLAY FUNCTION
10 and 12 MIRROR DEVICE WITH A DISPLAY FUNCTION
20 COVER
21 MIRROR SURFACE
22 HALF MIRROR
30 and 35 DISPLAY PANEL
31 LIQUID CRYSTAL PANEL
32 BACKLIGHT
32L LEFT BACKLIGHT
32R RIGHT BACKLIGHT
32C CENTRAL BACKLIGHT
40 MOTION SENSOR
41U UPWARD DIRECTION DETECTION PHOTODIODE
41D DOWNWARD DIRECTION DETECTION PHOTODIODE
41L LEFT DIRECTION DETECTION PHOTODIODE
41R RIGHT DIRECTION DETECTION PHOTODIODE
51 REAR CAMERA (IMAGING DEVICE)
52 LEFT-SIDE CAMERA (IMAGING DEVICE)
53 RIGHT-SIDE CAMERA (IMAGING DEVICE)
60L LEFT DISPLAY SECTION
60C CENTRAL DISPLAY SECTION
60R RIGHT DISPLAY SECTION
100 CONTROL UNIT
102 and 103 CAPTURE CONTROL UNIT
104 and 105 DISPLAY CONTROL UNIT
106 MOTION CONTROL UNIT
108 SWITCHING CONTROL UNIT
200 VEHICLE
500 CAPTURE RANGE OF REAR CAMERA
501 DISPLAY RANGE IN CAPTURE RANGE OF REAR CAMERA
510 CAPTURE RANGE OF LEFT-SIDE CAMERA
511 DISPLAY RANGE IN CAPTURE RANGE OF LEFT-SIDE CAMERA
520 CAPTURE RANGE OF RIGHT-SIDE CAMERA
521 DISPLAY RANGE IN CAPTURE RANGE OF RIGHT-SIDE CAMERA

## Claims

1. A mirror device with a display function, the mirror device comprising:
a rearview mirror (1) with a display function, the rearview mirror (1) including a display panel that is suitable to display a picture of an imaging device that captures rear of a vehicle, and a half mirror provided in a display surface of the display panel;
a motion sensor (40) configured to perform motion detection;
a switching control unit (108) configured to
perform processing of switching a mode to a display mode in which the rearview mirror with a display function executes the display function that executes display on the display panel, in a motion detection result in any direction of directions detected by the motion sensor (40), when the rearview mirror (1) with a display function is performing in a mirror mode in which the rearview mirror with a display function functions as a rearview mirror using a mirror surface of the half mirror and the display on the display panel is stopped, and
process the motion detection detected by the motion sensor (40) as a moving instruction of a display range to each of the directions, when the rearview mirror (1) with a display function is performing in the display mode.

2. The mirror device with a display function according to claim 1, wherein
the switching control unit (108) is configured to perform processing of stopping the display on the display panel and switching the mode to the mirror mode in which the rearview mirror with a display function functions as a rearview mirror, by reciprocating motion detection in any direction of the directions detected by the motion sensor (40), when the rearview mirror (1) with a display function is performing in the display mode.

3. The mirror device with a display function according to claim 1 or 2, wherein
the display panel included in the rearview mirror (1) with a display function is configured to display a picture of an imaging device configured to capture right and left of the vehicle, in addition to a picture of an imaging device configured to capture the rear of the vehicle, and
the switching control unit (108) is configured to process the motion detection detected by the motion sensor (40) as a moving instruction of a display range of the picture that captures the rear of the vehicle, when the rearview mirror (1) with a display function is performing in the display mode.

4. A display switching method comprising:
switching, when a rearview mirror (1) with a display function including a display panel that is suitable to display a picture of an imaging device that captures rear of a vehicle, and a half mirror provided in a display surface of the display panel is performing in a mirror mode in which the rearview mirror with a display function functions as a rearview mirror using a mirror surface of the half mirror and the display on the display panel is stopped, a mode to a display mode in which the rearview mirror with a display function executes display function that executes display on the display panel, in a motion detection result in any direction of directions detected by a motion sensor (40) that performs motion detection; and
performing a moving instruction of a display range to each of the directions, by the motion detection detected by the motion sensor (40), when the rearview mirror (1) with a display function is performing in the display mode.

## Patentansprüche

1. Eine Spiegelvorrichtung mit einer Anzeigefunktion, wobei die Spiegelvorrichtung Folgendes aufweist:
einen Rückspiegel (1) mit einer Anzeigefunktion, wobei der Rückspiegel (1) ein Anzeigefeld aufweist, das geeignet ist zum Anzeigen eines Bildes einer Anzeigevorrichtung, das ein Rückseitenbereich des Fahrzeugs erfasst, und einen Halbspiegel, der in einer Anzeigenoberfläche des Anzeigefeldes vorgesehen ist;
einen Bewegungssensor (40), der konfiguriert ist zum Durchführen einer Bewegungsdetektion;
eine Schaltsteuereinheit (108), die konfiguriert ist zum
Durchführen einer Verarbeitung des Umschaltens eines Modus in einen Anzeigemodus, in welchem der Rückspiegel mit einer Anzeigefunktion die Anzeigefunktion ausführt, die die Anzeige an dem Anzeigefeld ausführt, in einem Bewegungsdetektionsergebnis in jeder Richtung der Richtungen, die von dem Bewegungssensor (40) detektiert wurde,
wenn der Rückspiegel (1) mit einer Anzeigefunktion in einem Spiegelmodus arbeitet, in welchem der Rückspiegel mit einer Anzeigefunktion als ein Rückspiegel arbeitet, der eine Spiegeloberfläche des Halbspiegels verwendet und die Anzeige an dem Anzeigefeld gestoppt ist, und
Verarbeiten der Bewegungsdetektion, die von dem Bewegungssensor (40) als eine Bewegungsinstruktion eines Anzeigebereichs in jede der Richtungen detektiert wird, wenn der Rückspiegel (1) mit einer Anzeigefunktion in dem Anzeigemodus arbeitet.

2. Rückspiegel mit einer Anzeigefunktion nach Anspruch 1, wobei
die Schaltsteuereinheit (108) konfiguriert ist zum Durchführen der Verarbeitung des Stoppens der Anzeige an dem Anzeigefeld und Umschalten des Modus in einen Spiegelmodus, in welchem der Rückspiegel mit einer Anzeigefunktion als ein Rückspiegel arbeitet, durch eine Hin- und Herbewegungsdetektion in jede Richtung der Richtungen, die von dem Bewegungssensor (40) detektiert wurden, wenn der Rückspiegel (1) mit einer Anzeigefunktion in dem Anzeigemodus arbeitet.

3. Rückspiegel mit einer Anzeigefunktion gemäß Anspruch 1 oder 2, wobei
das Anzeigefeld, das in dem Rückspiegel (1) mit einer Anzeigefunktion beinhaltet ist, konfiguriert ist zum Anzeigen eines Bildes einer Abbildungsvorrichtung, die konfiguriert ist zum Erfassen von rechten und linken Bereichen des Fahrzeugs, zusätzlich zu einem Bild einer Abbildungsvorrichtung, die konfiguriert ist zum Erfassen des Rückseitenbereich des Fahrzeugs, und
die Schaltsteuereinheit (108) konfiguriert ist zum Verarbeiten der Bewegungsdetektion, die von dem Bewegungssensor (40) detektiert wird, als eine Bewegungsinstruktion eines Anzeigebereichs des Bildes, das das Rückseitenbereich des Fahrzeugs erfasst, wenn der Rückspiegel (1) mit einer Anzeigefunktion in dem Anzeigemodus arbeitet.

4. Ein Anzeigeschaltverfahren, das Folgendes aufweist:
Schalten, wenn ein Rückspiegel (1) mit einer Anzeigefunktion, der ein Anzeigefeld, das geeignet ist zum Anzeigen eines Bildes einer Abbildungsvorrichtung, die einen Rückseitenbereich des Fahrzeugs erfasst, und einen Halbspiegel aufweist, der in einer Anzeigeoberfläche des Anzeigefeldes vorgesehen ist, in einem Spiegelmodus arbeitet, in welchem der Rückspiegel mit einer Anzeigefunktion als ein Rückspiegel arbeitet, der eine Spiegeloberfläche des Halbspiegels verwendet, während die Anzeige auf dem Anzeigefeld gestoppt ist, eines Modus in einen Anzeigemodus, in welchem der Rückspiegel mit einer Anzeigefunktion eine Anzeigefunktion ausführt, die eine Anzeige auf dem Anzeigefeld ausführt, und zwar bei einem Bewegungsdetektionsergebnis in jede Richtung der Richtungen, die von dem Bewegungssensor (40), der eine Bewegungsdetektion durchführt, detektiert wird; und
Durchführen einer Bewegungsinstruktion eines Anzeigebereichs in jede Richtung, durch die Bewegungsdetektion, die von dem Bewegungssensor (40) detektiert wird, wenn der Rückspiegel (1) mit einer Anzeigefunktion in dem Anzeigemodus arbeitet.

## Revendications

1. Miroir avec fonction d'affichage, le miroir comprenant :
un rétroviseur (1) avec fonction d'affichage, le rétroviseur (1) comprenant un panneau d'affichage qui est approprié pour afficher une image d'un dispositif d'imagerie qui capture l'arrière d'un véhicule, et un demi-miroir prévu dans une surface d'affichage du panneau d'affichage ;
un capteur de mouvement (40) agencé pour réaliser une détection de mouvement ;
un module de commande de commutation (108) agencé pour
réaliser un traitement de commutation d'un mode vers un mode d'affichage dans lequel le rétroviseur avec fonction d'affichage exécute la fonction d'affichage qui exécute un affichage sur le panneau d'affichage, dans un résultat de détection de mouvement dans toutes les directions détectées par le capteur de mouvement (40), lorsque le rétroviseur (1) avec fonction d'affichage fonctionne dans un mode de miroir dans lequel le rétroviseur avec fonction d'affichage fonctionne comme un rétroviseur en utilisant une surface de miroir du demi-miroir et l'afficheur du panneau d'affichage est arrêté, et
traiter la détection de mouvement détectée par le capteur de mouvement (40) comme une instruction de mouvement d'une plage d'affichage vers chacune des directions, lorsque le rétroviseur (1) avec fonction d'affichage fonctionne dans le mode d'affichage.

2. Miroir avec fonction d'affichage selon la revendication 1, dans lequel
le module de commande commutation (108) est agencé pour réaliser un traitement consistant à arrêter l'affichage sur le panneau d'affichage et commuter le mode sur le mode de miroir dans lequel le rétroviseur avec fonction d'affichage fonctionne en tant que rétroviseur, en alternant une détection de mouvement dans toutes les directions détectées par le capteur de mouvement (40), lorsque le rétroviseur (1) avec fonction d'affichage fonctionne dans le mode d'affichage.

3. Miroir avec fonction d'affichage selon la revendication 1 ou 2, dans lequel
le panneau d'affichage inclus dans le rétroviseur (1) avec fonction d'affichage est agencé pour afficher une image d'un dispositif d'imagerie agencé pour capturer la droite et la gauche du véhicule, en plus d'une image d'un dispositif d'imagerie agencé pour capturer l'arrière du véhicule, et
le module de commande commutation (108) est agencé pour traiter la détection de mouvement détectée par le capteur de mouvement (40) en tant qu'instruction de mouvement d'une plage d'affichage de l'image qui capture l'arrière du véhicule, lorsque le rétroviseur (1) avec fonction d'affichage fonctionne dans le mode d'affichage.

4. Procédé de commutation d'affichage comprenant :
commuter, lorsqu'un rétroviseur (1) avec fonction d'affichage comprenant un panneau d'affichage qui est approprié à afficher une image d'un dispositif d'imagerie qui capture l'arrière d'un véhicule, et un demi-miroir prévu dans une surface d'affichage du panneau d'affichage fonctionne dans un mode de miroir dans lequel le rétroviseur avec fonction d'affichage fonctionne en tant que rétroviseur en utilisant la surface de miroir du demi-miroir et l'affichage sur le panneau d'affichage est arrêté, d'un mode vers un mode d'affichage dans lequel le rétroviseur avec fonction d'affichage exécute une fonction d'affichage qui exécute un affichage sur le panneau d'affichage, dans un résultat de détection de mouvement dans toutes les directions détectées par un capteur de mouvement (40) qui réalise une détection de mouvement ; et
réaliser une instruction de mouvement d'une plage d'affichage vers chacune des directions, par la détection de mouvement détectée par le capteur de mouvement (40), lorsque le rétroviseur (1) avec fonction d'affichage fonctionne dans le mode d'affichage.
